# EUROPÄISCHE PATENTSCHRIFT

(11) **EP 0 935 634 B1**
(45) Veröffentlichungstag und Bekanntmachung des Hinweises auf die Patenterteilung: **17.04.2002**
(21) Anmeldenummer: 97951130.0
(22) Anmeldetag: 20.10.1997
(51) Int. Cl.: C08J 9/00

(54) **SCHWEFELFREIE EXPANDIERENDE, HEISSHÄRTENDE KAUTSCHUK-FORMTEILE**
SULPHUR-FREE EXPANDING, HOT HARDENING SHAPED PARTS
PIECES FACONNEES EN CAOUTCHOUC EXPANSIBLES, DURCISSABLES A CHAUD ET EXEMPTES DE SOUFRE

(30) Priorität: 29.10.1996 DE 19644855
(43) Veröffentlichungstag der Anmeldung: 18.08.1999
(73) Patentinhaber: Henkel Teroson GmbH, 69123 Heidelberg (DE)
(72) Erfinder: BORN, Peter, D-69207 Sandhausen (DE); HÖLLRIEGEL, Klaus, D-69257 Wiesenbach (DE); NEUBAUER, Rudolf, D-69245 Bammental (DE)
(74) Vertreter: Wacker, Manfred, Dr.
(86) Internationale Anmeldenummer: EP9705781
(87) Internationale Veröffentlichungsnummer: WO9818853

(56) Entgegenhaltungen:
- EP-A- 0 454 411
- DD-A- 216 724
- GB-A- 1 343 083
- US-A- 4 255 524
- DATABASE WPI Section Ch, Week 8142 Derwent Publications Ltd., London, GB; Class A32, AN 81-76667D XP002058649 & JP 56 111 658 A (TOYO RUBBER CHEM IND CO) , 3.September 1981
- DATABASE WPI Section Ch, Week 8643 Derwent Publications Ltd., London, GB; Class A12, AN 86-282583 XP002058650 & JP 61 207 447 A (JAPAN SYNTHETIC RUBBER CO LTD) , 13.September 1986
- DATABASE WPI Section Ch, Week 8428 Derwent Publications Ltd., London, GB; Class A12, AN 84-174404 XP002058651 & JP 59 096 924 A (TOYO RUBBER CHEM IND CO) , 4.Juni 1984
- DATABASE WPI Section Ch, Week 7632 Derwent Publications Ltd., London, GB; Class A12, AN 76-60679X XP002058652 & JP 51 073 071 A (UBE IND LTD) , 24.Juni 1976

## Beschreibung

Die Erfindung betrifft heißhärtende, expandierende Formteile auf der Basis von festen Polybutadien-Kautschuken und Vulkanisationsmitteln, deren Vulkanisationsmittel frei von elementarem Schwefel ist. Die Erfindung betrifft weiterhin ein Verfahren zur Herstellung dieser Formteile, deren Verwendung zum Verbinden und/oder Abdichten metallischer Bauteile sowie ein Verfahren zum flächigen Verbinden von Festkörperoberflächen, insbesondere Metallteilen für den Fahrzeugbau.

Die Verklebung bzw. das Abdichten von Blechteilen im Fahrzeugbau, insbesondere bei Karosserien von Automobilen, wird häufig an Rohblechteilen vorgenommen. Die Aushärtung der hierbei eingesetzten Kleb-/Dichtstoffe erfolgt später in den Lacktrockenöfen. Vorher durchlaufen die verklebten bzw. abgedichteten Teile Reinigungs-, Phosphatier- und Tauchgrundierungsstufen. Durch die in diesen Stufen verwendeten Behandlungsmittel können die Kleb- bzw. Dichtmittel aus den Klebefugen gespült werden. Um diesen Anforderungen gerecht zu werden, sind verschiedene Vorgehensweisen bekannt geworden, z.B. eine thermisch/induktive Vorhärtung von niedrigviskosen, pastösen Kleb-/Dichtstoffen, die Verwendung von Klebstoffen in Form von lösungsmittel-haltigen Zusamrnensetzungen oder Hotmelts, als zweikomponentige Produkte oder auch als Formteile, die in der Regel manuell appliziert werden und zum Zeitpunkt der Applikation eine Eigenklebrigkeit besitzen. Diese Formteile können dabei in Band- oder Rundschnurform oder als Stanzteile oder als Profile beliebigen Querschnitts vorliegen.

Die DD-A-216 724 beschreibt Dichtringe hergestellt aus Mischunen von 1,4-Cis-Polybutadien, Styrol-Butadien-Kautschuk mit einem Styrolgehalt bis 30 % und synthetischem 1,4-Cis-Polyisopren oder Naturkautschuk , die vorzugsweise in Verhältnissen von 2:3:4 vorliegen sollen. Der überwiegende Teil des Kautschuks ist gemäß der Lehre dieser Schrift ein Isoprenkautschuk bzw. ein Styrolbutadienkautschuk. Die offenbarten Elastomermischungen eignen sich zur Herstellung von porigen Dichtringen. Die DD-A-216 724 offenbart ein Material, das es ermöglicht, daß während des Vulkanisationsvorganges mit einem Verfahrensschritt sowohl der Treibprozeß abläuft als auch die Vulkanisation und der Ringschluß erfolgen und dabei gesichert wird, daß ein dimensionsstabiler poriger Ring entsteht. Es wird an keiner Stelle die klebende Funktion derartiger Zusammensetzungen offenbart.

Die DE-A-3445325 beschreibt haftklebrige Formteile, insbesondere Dichtstoffprofile, die aus Plastisolen auf Basis von PVC- und/oder Polymeren Methacrylsäureestern und/oder Ethylen-Vinylacetatcopolymeren hergestellt werden. Derartige Formteile sind jedoch stark verbesserungsbedürftig, sie haben beispielsweise nur Haftung auf EC-grundiertem

Blech, so dass sie schon aus diesem Grunde nicht im Rohbau, d.h. auf den nicht vorbehandelten geölten Blechen appliziert werden können. Da Plastisol-Zusammensetzungen bekanntermaßen auch nach dem Ausgelieren thermoplastischen Charakter behalten, verlieren derartige Verklebungen bzw. Abdichtungen bei Temparaturbelastung ihre mechanische Festigkeit.

Zur Überwindung der beiden letztgenannten technischen Probleme sind seit einer Reihe von Jahren heißhärtende Formteile auf Kautschukbasis im Einsatz. Diese bestehen in der Regel aus einer Mischung flüssiger und ggf. fester Kautschuke auf der Basis von Polyolefinen, insbesondere auf der Basis von Dien-Homo- bzw. Copolymeren. Als Härtungssystem enthalten diese Kautschuk-Formteile ein Vulkanisationssystem auf der Basis von elementarem Schwefel und ggf. beschleunigend wirkenden Vulkanisationshilfsmitteln. Prinzipiell ähneln derartige Zusammensetzungen von Formteilen denen der pumpbaren pastösen Produkte wie sie z.B. in der JP-A-93059345 oder in der DE-A-3835740 beschrieben werden. Weitere Beispiele für heißhärtende expandierende und nichtexpandierende Klebstoffe auf der Basis von Schwefel-vulkanisierenden Kautschukklebstoffen in lösungsmittelhaltiger bzw. lösungsmittelfreier Form werden in der EP-A-476224, EP-A-643117 sowie in der noch unveröffentlichten DE-A-19518673 beschrieben. Die JP-A-49099643 beschreibt vulkanisierbare Kautschukzusammensetzungen mit guter Extrudierfähigkeit, die Li-katalysierten Butadienkautschuk, d.h., Kautschuk mit einem hohen Trans-1,4-Gehalt, enthalten und deren Vulkanisationssystem aus elementarern Schwefel und p-Benzochinondioxim besteht. Außerdem enthalten diese Zusammensetzungen einen sehr hohen Anteil an Ruß. Aus diesen Gründen sind diese Kautschukzusammensetzungen für die Herstellung heißhärtbarer expandierender Formteile im Sinne dieser Erfindung, d.h. als Kleb- und Dichtstoffe für den Einsatz im Karosserie-Rohbau, nicht geeignet.

Heißhärtende expandierende Formteile auf der Basis von festen und zum Teil auch flüssigen Kautschuken und Vulkanisationsmitteln, die elementaren Schwefel enthalten, gehören zum gängigen Stand der Technik, obwohl sie unseres Wissens nicht in Patenten veröffentlicht worden sind. Derartige Formteile des Standes der Technik bestehen in der Regel im wesentlichen aus einer Mischung von festem Butylkautschuk, vorvernetztem festem Butylkautschuk, festem Naturkautschuk sowie Extenderölen, Füllstoffen, klebrigmachenden Harzen, Pigmentruß, haftvermittelnden Harzen und einem Vulkanisationssystem auf der Basis von elementarem Schwefel sowie ggf. organischen Treibmitteln.

Obwohl die letztgenannten heißhärtenden Formteile bereits umfangreich in der Praxis eingesetzt werden, bedürfen sie in einigen Punkten erheblicher Verbesserungen:
- Die gehärteten Produkte weisen einen typischen "Gummigeruch" auf, der vermutlich auf den verwendeten elementaren Schwefel im Vulkanisations- bzw. Vernetzungssystem zurückzuführen ist, dieser Geruch führt insbesondere während der Härtung zu unangenehmen Belästigungen.
- Im ungehärteten Anlieferungszustand der vorgeformten/dimensionierten Profile/Stanzteile für die Handapplikation sollen diese Teile nur sehr geringe Kautschuk-elastische Rückstellkräfte aufweisen und leicht verformbar sein, damit sie sich den zu fügenden Metallteilen ohne großen Kraftaufwand anpassen und die Zwischenräume leicht vollständig ausfüllen.
- Es muss vermieden werden, dass zu hohe Rückstellkräfte der Formteile ungünstige Spannungen und Verformungen der Blechteile im Härtungsprozess "festhalten".
- Im gehärteten Gebrauchszustand soll ein weicher, elastischer Schaum mit einer geschlossenen Außenhaut resultieren.

Die letztgenannten Eigenschaften sind insbesondere auch wichtig bei sogenannten Sandwich-Verklebungen von Blechteilen mit darunterliegenden Verstärkungsrahmen oder Spriegeln, damit die Deformation der so verklebten Bleche auf ein Minimum reduziert wird. Dies ist insbesondere wichtig bei den großflächigen Blechteilen einer Automobilkarosserie, deren Aussenseite im Sichtbereich liegen, damit durch "Einzugserscheinungen", auch "Read-through"Effekt genannt, der optische Eindruck der hochglänzenden Lackoberfläche der fertigen Karosserie nicht störend beeinflußt wird.

Es bestand also die Aufgabe, heißhärtbare Formteile bereitzustellen, die während des Härtungsvorganges expandieren können und dabei keinen unangenehmen "Gummigeruch" entwickeln. Weiterhin sollten die vorgeformten Teile im ungehärteten Anlieferungszustand für die Handapplikation nur sehr geringe kautschukelastische Rückstellkräfte aufweisen und leicht verformbar sein, im gehärteten Gebrauchszustand soll ein weicher, elastischer Schaum mit einer geschlossenen Außenhaut resultieren. Außerdem soll das Vulkanisationssystem so beschaffen sein, dass die breiten Temperaturspannen, die beim Einbrennen der Elektrotauchlackierung bei der Automobilfertigung für den Härtungs- und Expansionsvorgang genutzt werden können. Diese Ofentemperaturen liegen in der Regel zwischen 150°C und 190°C, es können jedoch auch Spitzenbelastungen bis etwa 220 bis 240°C auftreten.

Erfindungsgemäß wurde diese Aufgabe durch heißhärtbare, expandierende Formteile gelöst, die als Polymerbasis festen Polybutadienkautschuk verwenden und Vulkanisationsmittel enthalten, die frei von elementarern Schwefel sind. Im Rahmen dieser Erfindung werden unter festem Polybutadienkautschuk Homo- bzw. Copolymere des Butadiens verstanden, deren Molekulargewicht >20000 ist, in der Regel ist deren Molekulargewicht >80000, besonders bevorzugt sind Molekulargewichtsbereiche zwischen 150000 und 400000. In einer bevorzugten Ausführungsform der Erfindung soll dieser Polybutadienkautschuk zu mehr als 70 Gew.% aus cis-1,4-Polybutadien bestehen, besonders geeignet sind feste Polybutadiene mit 80 oder sogar 98% cis-konfigurierten Doppelbindungen. Obwohl für die erfindungsgemäßen Formteile feste Kautschuke auf Basis von Butadienhomopolymerisaten besonders bevorzugt sind, eignen sich auch dessen Copolymere mit Styrol. Die im gängigen Stand der Technik eingesetzten Butylkautschuke (IIR), Naturkautschuk (NR), vorvernetzter Butylkautschuk, synthetische Polyisoprene, EPDM-Kautschuk oder Chlorbutyl-Kautschuke weisen im ungehärteten Anlieferungszustand eine sehr hohe Kautschukelastische Rückstellkraft auf und sind daher schwer verformbar, so dass eine vollständige Benetzung bzw. Ausfüllung der abzudichtenden Hohlräume unbefriedigend bleibt. Außerdem treten wegen der hohen Rückstellkräfte häufig Spannungen während des Aushärtens im Ofen auf.

Die erfindungsgemäße Verwendung eines Vulkanisationssystems, das frei von elementarem Schwefel ist, ermöglicht während des Härtungsvorganges die Bildung eines weichen, elastischen Schaums mit einer geschlossenen Außenhaut und verhindert den "Gummi-Vulkanisationsgeruch".

Die erfindungsgemäßen, heißhärtbaren und schäumbaren Kautschuk-Formteile enthalten die folgenden Bestandteile :
5-50 Gew. % eines oder mehrer Festkautschuke auf der Basis von Cis-1,4-Polybutadien mit einem Molekulargewicht oberhalb von 80.000 und einem Cis-Gehalt von mehr als 70 %,
0,02-5 Gew. % Vulkanisationsmittel, die frei von elementarem Schwefel sind, Vulkanisationsbeschleuniger, Katalysatoren,
10-70 Gew. % Füllstoffe,
5-20 Gew. % Klebrigmacher und/oder 0,1-10 Gew.- % Haftvermittler,
Treibmittel,
2-20 Gew. % Extenderöle,
0,1-5 Gew. % Alterungsschutzmittel,
ggf. Rheologiehilfsmittel
enthalten, wobei die Summe der Bestandteile 100 Gew. % ergibt.

Die Festkautschuke sind dabei cis-1,4-Polybutadien-Homopolymere mit einem cis-Gehalt von mehr als 70%, vorzugsweise zwischen 80 und 98%. Das Molekulargewicht des Festkautschukes liegt dabei oberhalb 80000, besonders bevorzugte Bereiche sind 200000 bis 400000. Der Anteil des Festkautschukes an der Gesamtzusammensetzung hängt dabei von den gewünschten Eigenschaften der Formteile im ungehärteten als auch im gehärteten Zustand ab. Er variiert zwischen 5 und 50 Gew.% der Gesamtformulierung, bevorzugte Bereiche sind 20 bis 30 Gew.% Festkautschuk.

Die Vernetzungs- bzw. Härtungsreaktion der Kautschukzusammensetzung und das Aufschäumen haben einen entscheidenden Einfluss auf die Klebe- und Abdichtfunktion des Formteils, daher müssen das Vulkanisationssystem und die Treibmittel besonders sorgfältig ausgewählt und abgestimmt werden. Als Vulkanisationssysteme eignen sich ausschließlich solche, die keinen elementaren Schwefel enthalten. Insbesondere besteht das Vulkanisationssystem aus Chinonen, p-Benzochinondioxim, p-Nitrosobenzol und Dinitrosobenzol, wobei p-Benzochinindioxim bevorzugt ist. Prinzipiell können jedoch auch peroxidische Vulkanisationssysterne verwendet werden. Gegebenenfalls kann das Vulkanisationssystem noch organische Beschleuniger enthalten wie z.B. polyfunktionelle Amine, Dithiocarbamate (in Form ihrer Ammonium- bzw. Metallsalze), Xanthogenate, Thiuram-Verbindungen (Monosulfide und Disulfide), Thiazolverbindungen, Aldehyd-Aminbeschleuniger (z.B. Hexamethylentetramin) sowie Guanidinbeschleuniger oder Dibenzothiazyldisulfid oder Diphenyl-guanidin. Der Gehalt an Vulkanisationsmitteln liegt zwischen 0,02 und 5 Gew.%, bevorzugt eingesetzte Mengen liegen zwischen 0,05 und 0,24 Gew.%. Weiterhin können als Beschleuniger Zinkverbindungen zugesetzt werden, wobei zwischen den Zinksalzen von Fettsäuren, Zinkdithiocarbamaten, basischen Zinkcarbonaten sowie insbesondere feinteiligem Zinkoxid gewählt werden kann. Der Anteil an aktivem Zinkoxid in der Gesamtzusammensetzung liegt zwischen 0,5 und 10 Gew.%, vorzugsweise zwischen 2 und 5 Gew.%.

Zum Erzielen der Aufschäumung während des Härtungsvorganges können prinzipiell alle gängigem Treibmittel verwendet werden, vorzugsweise werden jedoch organische Treibmittel aus der Klasse der Azoverbindungen, N-Nitosoverbindungen, Sulfonylhydrazide oder Sulfonylsemicarbazide eingesetzt. Für die erfindungsgemäß zu verwendenden Azoverbindungen seien beispielhaft das Azobisisobutyronitril und insbesondere das Azodicarbonamid genannt. Aus der Klasse der Nitrosoverbindungen sei beispielhaft das Di-Nitrosopentamethylentetramin genannt, aus der Klasse der Sulfohydrazide das 4,4'-Oxybis(benzolsulfonsäurehydrazid), das Diphenylsulfon-3,3'-Disulfohydrazid oder das Benzol-1,3-Disulfohydrazid und aus der Klasse der Semicarbazide das p-Toluolsulfonylsemicarbazid genannt. Obwohl die vorgenannten Treibmittel besonders bevorzugt eingesetzt werden, können an ihre Stelle jedoch auch die sogenannten Mikrohohlkugeln, d.h., nicht expandierte thermoplastische Polymerpulver treten, die mit niedrigsiedenden organischen Flüssigkeiten getränkt bzw. gefüllt sind. Derartige "Microspheres" sind beispielsweise in der EP-A-559254, der EP-A-586541 oder der EP-A-594598 beschrieben. Gegebenenfalls können diese Mikrohohlkugeln in beliebigem Mengenverhältnis mit den oben genannten Treibmitteln kombiniert werden.

Falls erforderlich, können die erfindungsgemäßen Formteile Klebrigmacher und/oder Haftvermittler enthalten. Hierzu eignen sich beispielsweise Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyaminoamide, Anhydride und Anhydrid-enthaltende Copolymere. Auch der Zusatz von Polyepoxyharzen in geringen Mengen kann bei manchen Substraten die Haftung verbessern. Hierfür eignen sich dann jedoch vorzugsweise die festen Epoxidharze mit einem Molekulargewicht von über 700 in fein gemahlener Form. Falls Klebrigmacher bzw. Haftvermittler eingesetzt werden, hängt deren Art und Menge im wesentlichen von dem Substrat ab, auf welches die Formteile appliziert werden. Typische klebrigmachende Harze (Tackifier) wie z.B. Terpenphenolharze oder Harzsäurederivate werden in Konzentrationen zwischen 5 und 20 Gew.% verwendet, typische Haftvermittler wie Polyamine, Polyaminoamide oder Phenolharze oder Resorcinderivate werden im Bereich zwischen 0,1 und 10 Gew.% verwendet.

Zur Einstellung der Konsistenz im ungehärteten Zustand sowie der mechanischen Eigenschaften im gehärteten Zustand können die erfindungsgemäßen Formteile noch Extenderöle oder Weichmacher enthalten. Hierfür werden hauptsächlich die aliphatischen, aromatischen oder naphthenischen Öle verwendet, ggf. durch Mitverwendung von niedermolekularem Polybuten oder Polyisobutylen. Falls Extenderöle eingesetzt werden, werden Mengen im Bereich zwischen 2 und 20 Gew.% verwendet.

Die Füllstoffe können aus einer Vielzahl von Materialien ausgewählt werden, insbesondere sind hier zu nennen Kreiden, natürliche oder gemahlene Calciumcarbonate, Calcium-Magnesiumcarbonate, Silikate, Schwerspat, Graphit sowie in untergeordneter Menge Ruß. Es kann ggf. zweckmäßig sein, dass zumindest ein Teil der Füllstoffe oberflächenvorbehandelt ist, insbesondere hat sich bei den verschiedenen Calciumcarbonaten bzw. Kreiden eine Beschichtung mit Stearinsäure zur Verminderung der eingetragenen Feuchtigkeit und zur Verminderung der Feuchtigkeitsempfindlichkeit der ausgehärteten Zusammensetzung als zweckmäßig erwiesen. Ggf. können die erfindungsgemäßen Zusammensetzungen noch zwischen 1 und 10 Gew.% an Calciumoxid enthalten, Der Gesamtanteil an Füllstoffen in der Formulierung kann zwischen 10 und 70 Gew.% variieren, der Vorzugsbereich liegt zwischen 25 und 60 Gew%.

Gegen den thermischen, thermooxidativen oder Ozon-Abbau der erfindungsgemäßen Zusammensetzungen können konventionelle Stabilisatoren oder Alterungsschutzmittel wie z.B. sterisch gehinderte Phenole oder Aminderivate eingesetzt werden, typische Mengenbereiche für diese Stabilisa-toren sind 0,1 bis 5 Gew.%, vorzugsweise 0,1 bis 2 Gew.%.

Ein bevorzugtes Anwendungsfeld der erfindungsgemäßen heißhärtbaren, schäumbaren Formteile oder Stanzteile ist der sogenannte Rohbau in der Automobilindustrie. Hier werden die vorgeformten ungehärteten Form- bzw. Stanzteile zum Verbinden bzw. Abdichten bei Unterfütterungen in Anbauteilen wie z.B. Motorhauben, Kofferraumdeckeln und Türen eingesetzt. Ein weiteres bevorzugtes Anwendungsfeld ist die Verwendung zwischen der Dachhaut und den Dach-spriegeln sowie beim Einbau von Schiebedachkonstruktionen oder das Abdichten von Kotflügelteilen. Hierzu werden die entsprechend geformten Formteile in Form von Rundschnüren, Bändern oder Profilen beliebigen Querschnittes entweder von großen Rollen entnommen und vor Ort auf die entsprechende Länge gerichtet oder es werden bereits bei der Herstellung abgelängte Stücke oder Stanzteile eingesetzt. Die profilierten Dichtbänder und/oder Schnüre können dabei ggf. in ihrem Inneren eine sog. "Seele", d.h., einen Faden zur Verbesserung der Verarbeitbarkeit im ungehärteten Zustand enthalten. Ein Verfahren zur Herstellung derartiger Formteile ist beispielsweise in der DE-C-2814217 beschrieben. Die Stanzteile können ggf. Distanzkörper enthalten, damit beim Zusammenpressen der so verbundenen Metallteile diese Teile auf einem durch die Distanzkörper vorgegebenen Mindestabstand gehalten werden. Dieses Verfahren ist zum Beispiel in der DE-A-3500924 beschrieben.

In den nachfolgenden Ausführungsbeispielen soll die Erfindung näher erläutert werden, wobei die Auswahl der Beispiele keine Beschränkung des Umfanges des Erfindungsgegenstandes darstellen soll.

In einem evakuierbaren Laborkneter wurden die nachfolgend aufgeführten Zusammensetzungen so lange gemischt, bis sie homogen waren. Falls nicht anders angegeben, sind alle Teile in den Beispielen Gewichtsteile. Die nachfolgende Formgebung zu Rundschnüren bzw. Bändern erfolgte in einem Labor-Extruder mit geeignet geformter Düse, wobei die Extrusion auf ein Trägerpapier (Trennpapier) erfolgte.

### Beispiel 1 (erfindungsgemäß)

| | |
|---|---|
| Polybutadien, fest | 25,00 |
| naphthenisches Mineralöl | 15,00 |
| Zinkoxid, aktiv | 3,00 |
| Azodicarbonamid, aktiviert | 1,00 |
| Antioxidans | 0,50 |
| Benzochinondioxim | 0,15 |
| Flammruß | 0,50 |
| Calciumcarbonat | 54,85 |

### Beispiel 2 (Vergleichsbeispiel)

| | |
|---|---|
| Butylkautschuk, fest | 2,00 |
| vorvernetzter Butylkautschuk, fest | 12,00 |
| Naturkautschuk, fest | 19,50 |
| naphthenisches Mineralöl | 9,00 |
| flüssiges Polyisobutylen (Oppanol B10, Fa. BASF) | 8,00 |
| Azodicarbonamid, aktiviert | 1,70 |
| Schwefel | 0,50 |
| Tetramethylthiuramdisulfid | 0,30 |
| Zinkoxid, aktiv | 0,15 |
| Salicylsäure, kristallin, Pulver | 1,50 |
| Flammruß | 1,30 |
| Alkylphenolharz | 2,60 |
| Glycerinester eines hydriertem Kolophoniums | 2,60 |
| Talkum | 36,05 |
| Cumaron-Indenharz | 2,80 |

Formkörper der Beispiele 1 und 2 wurden den folgenden anwendungstechnischen Tests unterzogen:

| Test | Beispiel 1 | Beispiel 2 |
|---|---|---|
| (Vergleich) | | |
| ungehärteter Zustand | | |
| Penetration¹⁾ | 50 | 50 |
| Bruchdehnung²⁾ [%] | 288 | 1136 |
| Reißfestigkeit²⁾ [N/m²] | 0,036 | 0,066 |

| gehärteter Zustand³⁾ | | |
|---|---|---|
| Bruchdehnung²⁾ [%] | 628 | 449 |
| Expansion [%] | 66 | 57 |

| | | |
|---|---|---|
| 1) ASTM D5, Konus 150g/20°C, 6sec. | | |
| 2) S2 Normstab, DIN 53504, Formteil 3mmm dick, Reißgeschwindigkeit 100 mm/min. | | |
| 3) Härtung 30 min 180°C. | | |

Aus den Versuchsergebnissen wird deutlich, dass die erfindungsgemäßen Formteile bei gleicher Konsistenz (Penetration) im nichtgehärteten Zustand in erwünschtem Maße eine sehr viel niedrigere Reißfestigkeit und insbesondere Bruchdehnung haben, so dass diese nur sehr geringe kautschukelastische Rückstellkräfte anfweisen. Im gehärteten Gebrauchszustand ist sowohl die Expansion als auch die Bruchdehnung in erwünschtem Maße signifikant höher als bei dem Vergleichsbeispiel des Standes der Technik. Während des Härtungsvorganges waren bei den Formkörpern des Standes der Technik der typische "Gummi-Vulkanisationsgeruch" wahrnehmbar, während bei den erfindungsgemäßen Formteilen kein derartiger Geruch wahrnehmbar war.

## Patentansprüche

1. Heißhärtende expandierende Formteile auf Basis von festem Polybutadienkautschuk und Vulkanisationsmitteln, **dadurch gekennzeichnet, daß** sie
5-50 Gew.% eines oder mehrerer Festkautschuke auf der Basis von Cis-1,4-Polybutadien mit einem Molekulargewicht oberhalb von 80.000 und einem Cis-Gehalt von mehr als 70%,
0,02-5 Gew.% Vulkanisationsmittel, die frei von elementarem Schwefel sind,
Vulkanisationsbeschleuniger, Katalysatoren,
10-70 Gew.% Füllstoffe,
5-20 Gew.% Klebrigmacher und/oder 0,1-10 Gew.-% Haftvermittler,
Treibmittel,
2-20 Gew.% Extenderöle,
0,1-5 Gew.% Alterungsschutzmittel,
ggf. Rheologiehilfsmittel
enthalten. wobei die Summe der Bestandteile 100 Gew.% ergibt.

2. Formteile gemäß Anspruch 1, **dadurch gekennzeichnet, dass** der Polybutadienkautschuk zu mehr als 70% aus Cis-1,4-Polybutadien besteht und das Molekulargewicht größer als 200000 ist

3. Formteile gemäß einem der vorhergehenden Ansprüche, **dadurch gekennzeichnet, dass** als Vulkanisationsmittel Chinone, Chinonoxime sowie gegebenenfalls organische und/oder anorganische Beschleuniger verwendet werden.

4. Formteile gemäß Anspruch 1 bis 2. **dadurch gekennzeichnet, dass** als Vulkanisationsmittel Peroxide gegebenenfalls in Kombination mit organischen und/ oder anorganischen Beschleunigern verwendet werden.

5. Formteile gemäß cinem der vorhergehenden Ansprüche, **dadurch gekennzeichnet, dass** sie organische oder anorganische Treibmittel und/oder expandierende Mikrohohlkugeln enthalten.

6. Verfahren zur Herstellung von Formteilen gemäß einem der vorhergehenden Ansprüche in Form von Bändern, Schnüren oder Stanzteilen, **gekennzeichnet durch** die folgenden an sich bekannten Verfahrensschritte
• Herstellen der Kautschukmischung unter hoher Scherwirkung gegebenenfalls unter Vakuum
• Extrudieren dieser Mischung **durch** geeignete Düsen zu flachen Bändern, Schnüren oder Profilen runden, rechteckigen oder dreieckigen Querschnitts
• gegebenenfalls Stanzen geformter Teile
sowie
• Aufbringen dieser Formteile auf Trägerpapier.

7. Verwendung der Formteile gemäß Anspruch 1 bis 5 zum Verbinden und/oder Abdichten metallischer Bauteile, insbesondere im Automobilbau.

## Claims

1. Heat-curing expanding mouldings based on solid polybutadiene rubber and vulcanizing agents, **characterized in that** they contain
5 to 50% by weight of one or more solid rubbers based on cis-1,4-polybutadiene with a molecular weight above 80,000 and a cis content of more than 70%,
0.02 to 5% by weight of vulcanizing agents free from elemental sulfur, vulcanization accelerators, catalysts,
10 to 70% by weight of fillers,
5 to 20% by weight of tackifiers and/or 0.1 to 10% by weight of coupling agents,
expanding agents,
2 to 20% by weight of extender oils,
0.1 to 5% by weight of antiagers.
optionally rheology aids,
the sum total of these constituents being 100% by weight.

2. Mouldings as claimed in claim 1, **characterized in that** more than 70% of the polybutadiene rubber consists of cis-1,4-polybutadiene and the molecular weight is above 200,000.

3. Mouldings as claimed in any of the preceding claims, **characterized in that** quinones, quinone oximes and optionally organic and/or inorganic accelerators are used as the vulcanizing agents.

4. Mouldings as claimed in claims 1 and 2, **characterized in that** peroxides, optionally in combination with organic and/or inorganic accelerators, are used as the vulcanizing agents.

5. Mouldings as claimed in any of the preceding claims, **characterized in that** they contain organic or inorganic blowing agents and/or expanding hollow microspheres.

6. A process for the production of the mouldings claimed in any of the preceding claims in the form of tapes, cords or stampings, **characterized by** the following process steps known per se
- preparation of the rubber mixture with intensive shearing, optionally in vacuo
- extrusion of the mixture through suitable nozzles to form flat tapes, cords or profiles of round, rectangular or triangular cross-section,
- optionally stamping shaped parts and
- applying the mouldings to release paper.

7. The use of the mouldings claimed in claims 1 to 5 for bonding and/or sealing metal parts, particularly in car production.

## Revendications

1. Pièces façonnées expansibles, durcissables a chaud, a base de caoutchouc polybutadiène solide et d'agents de vulcanisation, **caractérisées en ce qu'**elles renferment
- 5 a 50 % en poids d'un ou de plusieurs caoutchoucs solides a base de cis-1,4-polybutadiene possédant un poids moléculaire supérieur a 80 000 et une concentration en cis supérieure a 70 %,
- 0,02 a 5 % en poids d'agents de vulcanisation, qui sont exempts de soufre élémentaire, des accélérateurs de vulcanisation et des catalyseurs, 10 a 70 % en poids de charges,
- 5 a 20 % en poids des résines tackifiantes et/ou 0,1 a 10 % en poids d'agents d'adhésivité, des agents d'expansion,
- 2 a 20 % en poids d'huiles de dilution ou extendeurs (extender), 0,1 a 5 % en poids d'agents antivieillissement,
- éventuellement des adjuvants rhéologiques,
la somme des composants donnant 100 % en poids.

2. Pièces façonnées selon la revendication 1, **caractérisées en ce que** le caoutchouc polybutadiène est constitue a plus de 70 % de cis-1,4-polybutadiene et **en ce que** le poids moléculaire est supérieur a 200 000.

3. Pièces façonnées selon une des. revendications qui précèdent, **caractérisées en ce que** l'on utilise comme agent de vulcanisation, des quinones, des quinonoximes et le cas échéant, des accélérateurs organiques et/ou inorganiques.

4. Pièces façonnées selon la revendication 1 à 2, **caractérisées en ce que** l'on utilise comme agent de vulcanisation, des peroxydes le cas échéant en association avec des accélérateurs organiques et/ou inorganiques.

5. Pièces façonnées selon une des revendications qui précèdent, **caractérisées en ce qu'**elles renferment d es agents moussants organiques ou inorganiques et/ou des microsphères expansibles.

6. Procède de fabrication de pièces façonnées selon une des revendications qui précèdent, sous la forme de rubans, de cordons ou ganses ou de pièces découpées, **caractérisées par** les étapes de procède connues en soi suivantes
- préparation du mélange de caoutchouc sous un cisaillement élevé, le cas échéant sous vide;
- extrusion de ce mélange par des buses appropries en rubans plats, en cordons ou ganses ou en profiles de section ronde, carrée ou triangulaire;
- éventuellement, découpe de pièces formées et
- application de ces pièces façonnées sur un papier support.

7. Utilisation des pièces façonnées selon la revendication 1 a 5 pour joindre et/ou étancher des éléments de construction métalliques, en particulier dans la construction automobile.
